# EUROPEAN PATENT APPLICATION

(11) **EP 4 557 559 A1**
(43) Date of publication of application: **21.05.2025**
(21) Application number: 23210287.1
(22) Date of filing: 16.11.2023
(51) Int. Cl.: H02J 7/00, H02J 50/12, H02J 50/80

(54) **WIRELESS POWER TRANSFER**

(71) Applicant: Koninklijke Philips N.V., 5656 AG Eindhoven (NL)
(72) Inventor: DRAAK, Johannes Wilhelmus, 5656 AG Eindhoven (NL); LULOFS, Klaas Jakob, 5656 AG Eindhoven (NL); LEBENS, Pascal Leonard Maria Theodoor, 5656 AG Eindhoven (NL); AGAFONOV, Aleksei, 5656 AG Eindhoven (NL)
(74) Representative: Philips Intellectual Property & Standards

(57) **Abstract**

A power transmitter (101) wirelessly provides power to a power receiver (105) via an inductive power transfer signal generated by a power transfer coil (103). A driver (201) generates a drive signal for the power transfer coil (103) which switches between power off time intervals and power on time intervals. A communication unit (207) receives an energy storage depletion rate indication which is indicative of a rate of depletion of an energy storage of a power path of the power receiver. A controller (205) adapts a timing property of the power on duration time intervals and/or the power off time intervals in dependence on the energy storage depletion rate indication. The power transmitter may switch off the drive signal during times when power is not extracted from the power transfer signal due to power to the load being provided by the energy storage.

## Description

### FIELD OF THE INVENTION

The invention relates to wireless power transfer and in particular, but not exclusively, to wireless power transfer systems operating in accordance with elements of the Qi or Ki wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain). Based on the Qi Specification, an approach known as the Ki specification is being developed for high power applications, such as specifically for Kitchen appliances.

Most wireless power transfer systems, including Qi and Ki based system, are designed to operate with a variety of different devices having very different properties including different power extraction circuits and arrangements. However, although the devices comply with the defined specifications, it tends to not be feasible to provide optimum operation for all scenarios and variations of devices. For example, due to variations in the characteristics of individual devices, a suboptimal power transfer operation may result with e.g. reduced efficiency, increased losses, suboptimal power control etc.

Hence, an improved wireless power transfer approach would be advantageous, and in particular, an approach allowing increased flexibility, reduced cost, reduced complexity, improved power transfer operation, increased reliability, increased efficiency, reduced losses, improved power control and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided power transmitter for wirelessly providing power to a power receiver via an inductive power transfer signal, the power transmitter comprising: a power transfer coil arranged to generate the power transfer signal; a driver arranged to generate a drive signal for the power transfer coil to generate the power transfer signal, the driver being arranged to generate the drive signal to switch between power off time intervals and power on time intervals, a level of the drive signal during power off time intervals not exceeding a fifth of a level of the drive signal during power on time intervals; a communication unit arranged to communicate with the power receiver, the communication unit being arranged to receive an energy storage depletion rate indication, the energy storage depletion rate indication being indicative of a rate of depletion of an energy storage of a power path of the power receiver; and a controller arranged to adapt a timing property of at least one of the power on duration time intervals and the power off time intervals in dependence on the energy storage depletion rate indication.

The invention may allow improved performance and/or facilitated operation in many wireless power transfer systems. It may allow improved power transfer in many embodiments. In many embodiments, the approach may reduce losses and increase efficiency. It may in many scenarios reduce heating in foreign objects or metal in the proximity of the power transfer signal. The approach may provide improved adaptation to the specific power receiver and/or may in many embodiments allow improved power transfer, such as improved power control operation.

In many embodiments, the drive signal may be off/have substantially zero amplitude during power off time intervals. The amplitude/power level of the drive signal during power off time intervals may in many embodiments not exceed a 5^{th}, 10^{th}, and/or 20^{th} of a level of the drive signal during power on time intervals. The level of the drive signal may be an amplitude, a power level, and/or a voltage and/or current level/amplitude. The level referred to (for the power off time intervals and/or for the power on time intervals) may (individually for the power off time intervals and for the power on time intervals) be an average, median, or peak level. In many embodiments, a maximum level (typically power level or amplitude level) during the power off time intervals does not exceed a 5^{th}, 10^{th}, and/or 20^{th} of an average/median level (typically power level or amplitude level) of the drive signal during power on time intervals.

The energy storage depletion rate indication being indicative of a rate of depletion of an energy storage of a power path of the power receiver may be a capacitor discharge rate indication being indicative of a rate of discharge of a capacitor (specifically a smoothing capacitor) of a power path of the power receiver. An energy depletion rate may be an energy discharge rate.

In accordance with an optional feature of the invention, the energy storage depletion rate indication includes an indication of a value of smoothing capacitance of the power path of the power receiver.

This may provide improved power transfer in many scenarios and may allow improved adaptation to current conditions and the specific power receiver. It may provide a particularly advantageous indication of and adaptation to specific properties of the power path.

In accordance with an optional feature of the invention, the energy storage depletion rate indication includes an indication of a level of power being provided to a load of the power path.

This may provide improved power transfer in many scenarios and may allow improved adaptation to current conditions and the specific power receiver. It may provide a particularly advantageous indication of, and adaptation to, specific properties of the power path.

In accordance with an optional feature of the invention, the energy storage depletion rate indication includes an indication of a time constant of a load resistance and a smoothing capacitor of the power path of the power receiver.

This may provide improved power transfer in many scenarios and may allow improved adaptation to current conditions and the specific power receiver. It may provide a particularly advantageous indication of and adaptation to specific properties of the power path.

In accordance with an optional feature of the invention, the energy storage depletion rate indication includes an indication of a charge of a smoothing capacitor of the power path of the power receiver.

This may provide improved power transfer in many scenarios and may allow improved adaptation to current conditions and the specific power receiver. It may provide a particularly advantageous indication of and adaptation to specific properties of the power path.

In accordance with an optional feature of the invention, the timing property is a duration of at least one of the power off duration time intervals and the power on time intervals.

This may provide particularly efficient operation in many scenarios. It may provide a particularly advantages adaptation of the power transfer signal to match the properties of the power receiver and specifically of the power extraction by the power receiver.

In some embodiments, the timing property is a duration of the power off duration time intervals. In some embodiments, the timing property is a duration of the power on duration time intervals.

In accordance with an optional feature of the invention, the controller is arranged to increase a duration of the power on duration time intervals for the energy storage depletion rate indication being indicative of an increasing depletion rate.

This may provide particularly efficient operation in many scenarios. It may provide a particularly advantageous adaptation of the power transfer signal to match the properties of the power receiver and specifically of the power extraction by the power receiver.

In some embodiments, the controller is arranged to reduce a duration of the power off duration time intervals for the energy storage depletion rate indication being indicative of an increasing depletion rate.

In accordance with an optional feature of the invention, the power transmitter of any previous claim wherein the controller is arranged to modify a relationship between the energy storage depletion rate indication and the timing property in dependency of a duration of the power transfer.

This may provide improved power transfer operation in many scenarios, and may in particular improve the power transfer start-up operation.

In accordance with an optional feature of the invention, the power transmitter of any previous claim wherein the controller is arranged to set a duration of the power duration time intervals to be higher during an initial time interval of a power transfer than during a later time interval for a same value of the energy storage depletion rate indication.

This may provide improved power transfer operation in many scenarios, and may in particular improve the power transfer start-up operation.

In accordance with an optional feature of the invention, the drive signal to have a varying envelope and the controller is arranged to locate the power on time intervals to include a maximum of the envelope.

This may allow improved power transfer operation in many embodiments and scenarios.

In some embodiments, the driver is powered by a time varying power supply signal and the controller is arranged to locate the power on time intervals in dependence on a maximum of the time varying power supply signal.

In accordance with an optional feature of the invention, the controller is arranged to adapt a property of a power control loop in dependence on the energy storage depletion rate indication.

This may provide improved power control in a wireless power transfer.

In accordance with an optional feature of the invention, the property of the power control loop is a time constant.

This may provide improved power control in a wireless power transfer.

In accordance with an optional feature of the invention, the communication unit is arranged to receive a rectification indication being indicative of whether the power path of the power receiver includes a rectifier function.

This may allow improved performance and/or facilitated operation in many wireless power transfer systems. It may allow improved power transfer in many embodiments.

In accordance with another aspect of the invention, there is provided a power receiver for wirelessly receiving power from a power transmitter via an inductive power transfer signal; the power receiver comprising: an input circuit comprising a receiver coil arranged to extract power from the power transfer signal; a power path coupling the input circuit to a load to provide power extracted from the power transfer signal to the load, the power path including an energy storage; a communicator arranged to communicate data with the power transmitter, the communicator being arranged to transmit an energy storage depletion rate indication being indicative of a rate of depletion of an energy storage of the power path of the power receiver.

There may be provided a wireless power transfer system comprising a power transmitter as described above and a power receiver as described above.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of a half bridge inverter for a power transmitter;
FIG. 4 illustrates an example of a full bridge inverter for a power transmitter;
FIG. 5 illustrates an example of elements of a power receiver in accordance with some embodiments of the invention;
FIG. 6 illustrates an example of elements of a power path of a wireless power transfer system;
FIG. 7 illustrates an example of signals in a wireless power transfer system;
FIG. 8 illustrates an example of signals in a wireless power transfer system;
FIG. 9 illustrates an example of signals in a wireless power transfer system; and
FIG. 10 illustrates an example of signals in a wireless power transfer system.

### DETAILED DESCRIPTION OF THE EMBODIMENTS

The following description focuses on embodiments of the invention applicable to a high power wireless power transfer system utilizing a power transfer approach such as known from the Qi or Ki Specifications. However, it will be appreciated that the invention is not limited to this application but may be applied to many other wireless power transfer systems.

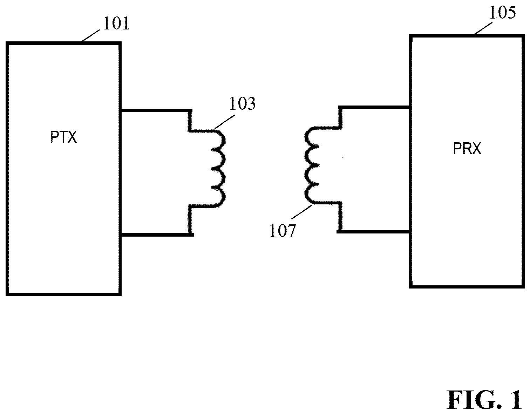

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and in many practical systems may be around 20-75 kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

In the following, the operation of the power transmitter 101 and the power receiver 105 will be described with specific reference to an embodiment generally in accordance with the Qi or Ki Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

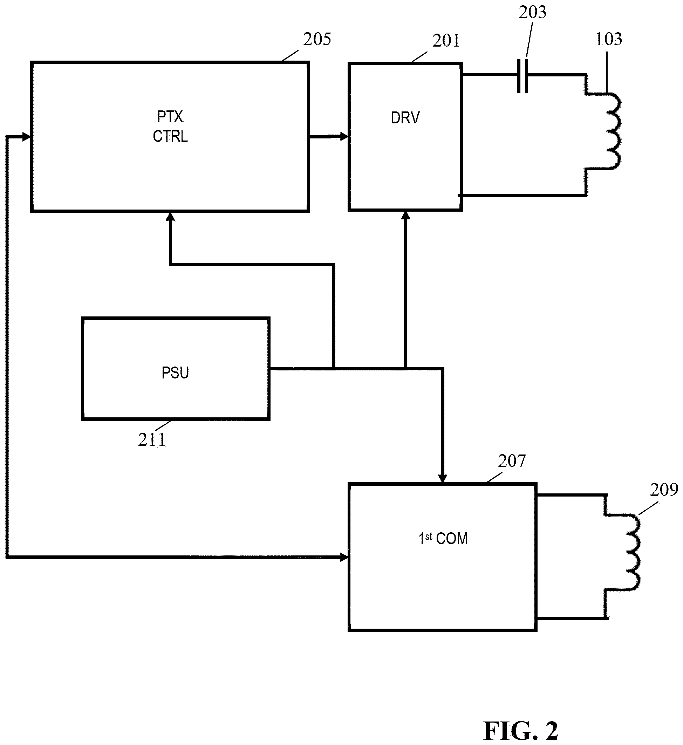

FIG. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

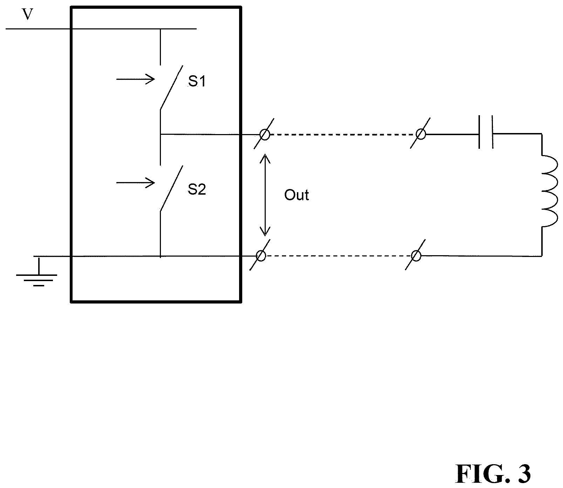

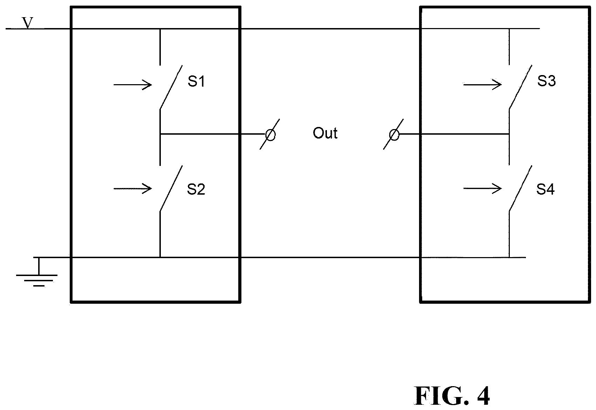

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches Sland S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 205 is in particular arranged to control the generation of the drive signal by the driver 201, and it can specifically control the power level of the drive signal, and accordingly the level of the generated power transfer signal. The power transmitter controller 205 comprises a power loop controller controlling a power level of the power transfer signal in response to the power control messages received from the power receiver 105 during the power transfer phase.

In the example of the power transmitter of FIG. 2, the power transmitter 101 comprises a power transmitter communicator 207 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 209. The power transmitter communicator 207 is coupled to the first communication coil 209 and is arranged to generate a communication drive signal which is fed to the first communication coil 209 to generate the communication carrier. The power transmitter communicator 207 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz..

The power transmitter communicator 207 may be arranged to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

For communication from the power receiver to the power transmitter, the modulation of the communication drive signal may be a load modulation. The power receiver may be arranged to modulate the communication drive signal by varying a loading of the communication drive signal generated by the communication coil 209 in accordance with the data to be transmitted. The power transmitter communicator 207 is specifically arranged to sense variations in the voltage and/or current of the communication coil 207 and to demodulate the load modulation based on these. In typical embodiments, the power transmitter communicator 207 may for example receive data from the power receiver and forward it to the power transmitter controller 205 for controlling the power transfer signal etc.

In some embodiments, the communication may be in accordance with the Near Field Communication, NFC, Specifications and the power receiver may specifically include NFC functionality. In these embodiments, the power transmitter communicator 207 and the first communication coil 209 may implement (at least) the functionality of an NFC reader. Thus, in some embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

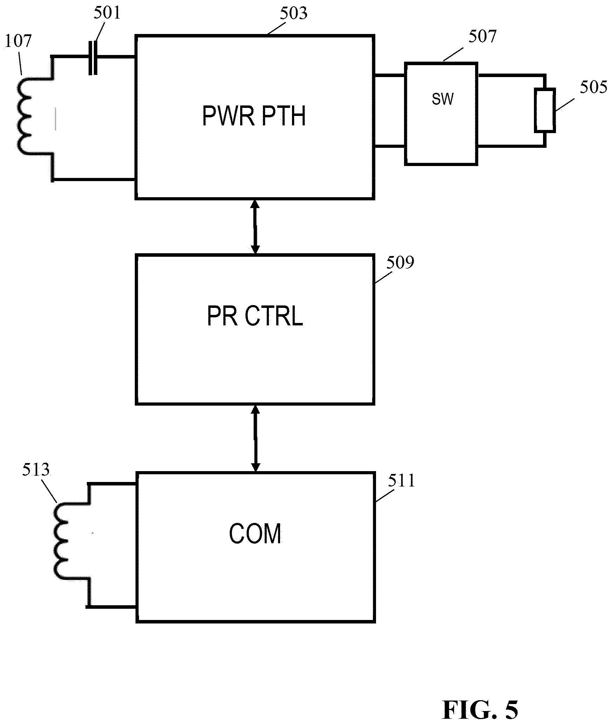

FIG. 5 illustrates some exemplary elements of the power receiver 105.

The power receiver 105 comprises an input circuit which is arranged to extract power from the power transfer signal to generate an induced power signal. The input circuit includes a receiver coil 107 arranged to extract power from the power transfer signal by induction, i.e. the magnetic field of the power transfer signal induces a signal in the receiver coil. In the example, the receiver coil 107 is coupled to a capacitor 501 which together with the receiver coil 107 forms an input resonance circuit. Thus, the input circuit may be a resonance circuit and the power transfer may be a resonant power transfer between resonance circuits. In other embodiments, only one, or none, of the power receiver and the power transmitter may utilize a resonance circuit for power transfer.

The input circuit is coupled to a power path 503 which comprises an input that is coupled to the input circuit 107, 501 and which receives the induced power signal. The induced power signal is an AC signal (corresponding to the electromagnetic power transfer signal).

The power path 503 couples the receiver coil 107 to a load 505 via a switch 507. The power path 503 includes a power control path which converts the power extracted by the receiver coil 107 into a suitable supply for the load 505.

The load 505 represents the target load for the power transfer. The load 505 may for example be an external device, a battery or charging function, etc. The load 505 may also represent the loading by internal circuitry, such as control, support, and auxiliary circuits supporting the power transfer. It will be appreciated that although FIG. 5 illustrates the switch 507 as directly switching in or out the load itself, switching may be performed at other positions in the power path, such as at the input to the power path, before or after rectification, etc. It will also be appreciated that in many embodiments the power path may not include any switching whatsoever and that the load may be constantly coupled to the power path (and e.g. requiring constantly provision of power).

In some embodiments, the power receiver controller 501 may provide a direct power path connecting the input resonance circuit to the switch 507 or load 505. In some power receivers, the power path may simply be a direct connection formed by two wires. However, in other power receivers, the power path may include an energy storage which typically may store energy over relatively short time periods. In many power receivers, the power path may include a rectifier. Such a rectifier may convert an induced AC signal to a (typically varying) DC signal. Such a rectifier may e.g. by a bridge or a single rectifier providing a half-wave rectified or full-wave rectified. In some power receivers, the power path may in addition to the rectifier include an energy storage such as specifically one or more smoothing capacitors which provide a more smoothed (less variation) DC signal. In other power receivers, the power path may include more complex functions, such as e.g. voltage control circuitry, impedance matching circuitry, current control circuitry etc. Similarly, it will be appreciated that the switch 507 may only be present in some embodiments and that in some embodiments the load 505 may permanently be coupled to the input resonance circuit.

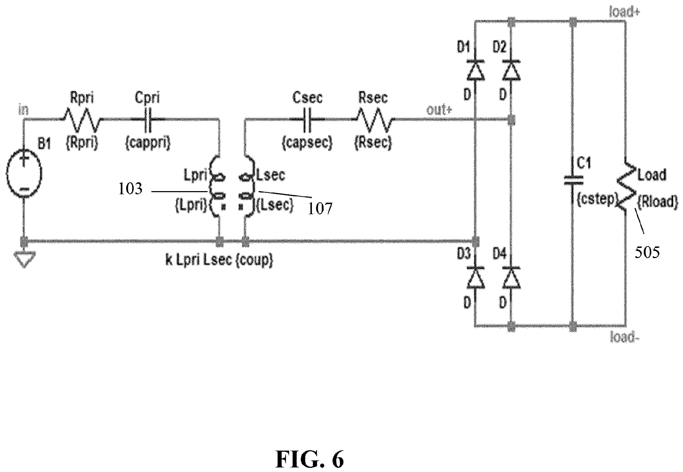

Thus, the power path 503 may be substantially different for different power receivers. However, for a very large number of power receivers, the power path comprises a rectifier (bridge) and a smoothing capacitor which is arranged to smooth the rectified power signal resulting in the power receiver 105 providing a smoothed DC voltage to the load. FIG. 6 illustrates an example of such a power path including both an equivalent diagram of the power path of the power transmitter and the power receiver.

The power receiver further comprises a power receiver controller 509 which performs various power receiver controller functionality required to perform power transfer, and in particular functions required to perform power transfer in accordance with the Qi or Ki Specifications.

The power receiver 105 comprises a power receiver communicator 511 and a power receiver communication coil 513. The power receiver communication coil 513 is arranged to couple to the power transmitter communication coil 209 and thus the communication carrier signal induces a current (at least an emf) in the power receiver communication coil 513.

The power receiver communicator 511 is coupled to the power receiver communication coil 513 and is arranged to determine amplitude variations in the induced signal and to demodulate amplitude modulations of the communication carrier signal. Thus, the power receiver communicator 511 is arranged to decode data transmitted from the power transmitter by amplitude modulation of the communication carrier signal. It will be appreciated that in other embodiments, the power receiver communicator 511 may be arranged to decode data modulated onto the communication carrier signal using other modulation formats such as frequency or phase modulation.

The power receiver communicator 511 is further arranged to load modulate the communication carrier signal in order to transmit data from the power receiver to the power transmitter. Specifically, the power receiver communicator 511 may comprise a load (such as a capacitor) which depending on the data to transmit can be switched between being coupled to the power receiver communication coil 513 and not being coupled to the power receiver communication coil 513. These load modulations may then be detected by the first communicator 307 of the power transmitter.

In the specific example, the power receiver communication coil 513 and the power receiver communicator 511 may provide NFC compatible communication operation. Specifically, the power receiver communication coil 513 may be arranged to provide functionality corresponding to an NFC tag and to decode data that has been ASK modulated onto the communication carrier signal in accordance with the NFC specifications.

Thus, the power receiver communicator 511 is arranged to transmit data to the power transmitter by varying the loading of the power receiver communication coil 513 in response to data to be transmitted to the power transmitter 101. The load variations are then detected and demodulated by the power transmitter 101 as will be known to the person skilled in the art.

In the example, the power receiver communicator 511 is furthermore arranged to demodulate amplitude, frequency, and/or phase modulation of the communication carrier signal in order to retrieve data transmitted from the power transmitter.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver. A power control loop is accordingly employed which controls a power property of the power transfer signal to result in the desired operating point at the power receiver. It will be appreciated that many other types of data may be exchanged between the power transmitter and the power receiver to support a range of functions.

In wireless power transfer systems such as Qi and Ki, a given power transmitter may be required to operate with many different power receivers having many different properties including having different power requirements and different power paths,

Indeed, a wide range of power transmitters and power receivers may exist and be required to interwork. For example, the coil sizes, induction values and loads can vary substantially. Indeed, most of the power transfer operating parameters may vary depending on the specific device characteristics and mechanical constructions. In addition, placement of the power transmitter changes the coupling between the inductors.

Furthermore, the devices can have several modes in which they operate, for example: several loads can be switched on or off such as in an airfryer appliance where the heating element can be turned on and off. This can result in a load step from 50 to 1200W and this can be repeated during operation of the device to keep the temperature constant.

Systems can also contain non-linear loads. For example, instead of a resistive component, the load may include a motor (such as e.g. in a food processor). This results in a completely different response of the system and has a large impact on the control system design. Normally the system uses a control loop to ensure that the right operating point is reached. Such a control loop can control the amount of power that is transmitted to the power receiver.

The inventors have realized that the operation of a wireless power transfer system, and in particular the power transfer operation itself, is particularly sensitive to specific effects that may occur for power paths that include energy storage, and specifically when this is combined with the power path including rectification.

In particular, for a power path that includes a rectifier followed by an energy storage, such as a smoothing capacitor, the power transfer operation may deviate substantially from that of e.g. a directly driven load. Such a power path, as e.g. in the example of the power path of FIG. 6, is typically used to provide a DC signal to the load and with the capacitor reducing the voltage variation over the load. Indeed, when a power path with a rectifier and a large buffer capacitor is provided, the output voltage to the load is substantially a constant DC signal/voltage. However, the inventors have also realized that this substantially impacts the power transfer operation and characteristics. The inventors have realized that such a power path provides a substantially different time varying loading of the power transfer signal than e.g. directly coupled loads. In the case of a large energy storage/smoothing capacitor (or indeed a battery), the power will only be extracted from the power transfer signal during peaks of the power transfer signal. Thus, rather than a continuous power extraction, the power extraction may occur only during very short peak time intervals. As a result, rather than a continuous power extraction, a bursty peak power extraction occurs.

This may be specifically prominent for scenarios and implementations where the power transfer signal has a varying envelope/amplitude. In many practical applications, the output of the driver 201 generating the drive signal is fed by a time varying supply voltage that directly results in envelope/amplitude variations of the drive signal generated by the output circuit.

The power transmitter is in many situations powered from an AC (Alternating Current) source, and specifically is often powered from a mains power supply, i.e. from the power net infrastructure of the locality in which the power transmitter is used. The power transmitter may accordingly comprise a power supply input 211 which receives an AC supply power (e.g. with an alternating voltage and current). In many embodiments, the input supply power may be a 110V, 220V, or 240V mains AC voltage.

The power supply input 211 may provide power to the entire power transmitter functionality and may typically include functionality for generating a lower voltage and power regulated DC supply voltage for powering the electronic functionality of the power transmitter. For example, the power supply input 211 may generate a voltage stabilized DC supply (e.g. of 3.3V, 5V, 9V, or 12V) that may be used to power various electronic and processing functionality.

The power supply input 211 is further arranged to provide a supply power to the driver 201 and specifically to the inverter output circuit. However, rather than providing a fixed regulated constant DC voltage, the supply to the output of the driver is often an AC or rectified AC voltage that follows the variations in the input supply signal.

The output of the driver 201 is typically a switch bridge as previously described. Contrary to the control electronics and processing facility which typically is provided by a constant regulated supply voltage, the supply voltage for the driver 201 is typically a varying voltage, and specifically is typically a rectified AC voltage with no further smoothing. As a consequence, the generated drive signal is typically one with a relatively high frequency switching (typically at least 10kHz) of an envelope voltage that itself is a time varying voltage, but with much lower frequency (typically less than 200Hz). The supply voltage may be generated as the input supply signal being reduced to a lower voltage (say to around 40V) by a power transformer and subsequently rectified using e.g. a rectifier bridge. The resulting supply signal may be a rectified sinewave signal and accordingly the drive signal may have a periodic envelope corresponding to a rectified sine wave. Thus, the drive signal is generated to have a (typically) periodic varying envelope/ amplitude, and typically with a rectified sinewave envelope/ amplitude.

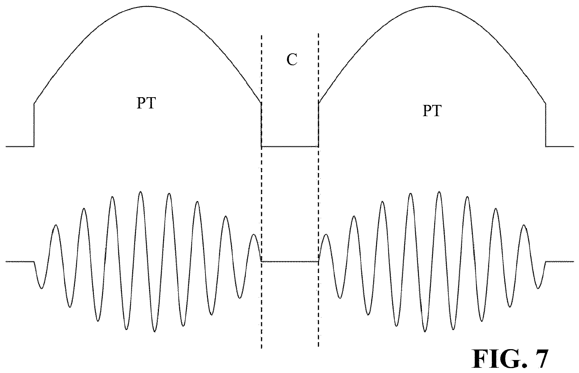

Accordingly, the generated drive signal, and thus the power transfer signal, may have two frequency properties, namely a fast switching frequency and a slower envelope/ amplitude frequency representing the periodic variations in the envelope/ amplitude of the drive signal/ power transfer signal. FIG. 7 illustrates an example of such a drive signal/ power transfer signal.

The amplitude variations of the power transfer signal results in a corresponding variation in the induced current/ voltage in the receiver coil 107. Thus, the induced power signal may also have a corresponding time varying property and thus the transferred power may exhibit a periodic time variation.

In the example of FIG. 7, the envelope of the drive signal/ power transfer signal follows a rectified sine wave except for around the zero crossings/ minima where the drive signal/ power transfer signal is set to have a zero amplitude. Thus, in the example, a repeating time frame may be imposed with the drive signal/ power transfer signal being active during power transfer time intervals PT and with the signal being off during short communication time intervals C. The approach may specifically be used to provide communication time intervals C in which communication can be performed without interference from the power transfer signal.

In many embodiments, the drive signal and the power transfer signal have a varying envelope/amplitude which corresponds to the power cycles of the supply voltage and often to the power cycles of the mains. Typical supply frequencies are 50Hz or 60Hz resulting in envelope cycles of a frequency of 100Hz or 120Hz.

In such scenarios, power transfer for a power path that includes rectifiers and a substantial energy storage, such as a large smoothing capacitor, will essentially be limited to not only the peaks of the high frequency cycles but also to only the peak of the low frequency power cycles. Accordingly, power transfer becomes extremely bursty/peaky with a relatively high instantaneous power transfer level for a very short time. In such a scenario, the power transfer is limited to a very short time interval but losses (e.g. during to the presence of metal or component losses) are still present potentially resulting in a low efficiency and undesired heating.

However, in contrast, if the same power is extracted for a power path which includes only a small or no energy storage, the same average power may be extracted but with the instantaneous power extraction being much lower and over a much longer duration. Indeed, if no energy storage is present, the power transfer may be continuous. A much less bursty power extraction results.

The inventors have further realized that the power transfer operation and characteristics may be substantially different in these different scenarios. For example, the properties and dynamics of the power control loop operation may vary substantially depending on the power transfer characteristics for the power path of the power receiver.

In the wireless power transfer system of FIG. 1, the power receiver of FIG. 5 is arranged to transmit an energy storage depletion rate indication to the power transmitter 101 where the energy storage depletion rate indication is indicative of a rate of depletion of an energy storage of a power path of the power receiver. The energy storage depletion rate indication may (in particular for the energy storage being a capacitor) be referred to as an energy discharge rate indication which is indicative of a rate of discharge of an energy storage (specifically a capacitance) of a power path of the power receiver (specifically when no power is extracted from the power transfer signal).

The energy storage depletion rate indication, which henceforth for brevity will also simply be referred to as the depletion rate indication, may thus indicate the level of energy storage that is provided by the power path and how quickly this may deplete. In some cases, the depletion rate indication may simply be a binary indication, such as an indication of whether the power path includes an energy storage or not. However, in many cases, the depletion rate indication may indicate a degree of the depletion rate for the energy storage.

The depletion rate indication may specifically be an indication of the rate at which the voltage over the load and/or the energy storage decreases as a function of time when no power is being extracted from the power transfer signal.

The depletion rate indication may typically reflect both the capacity/amount of energy storage and the power provided to the load. The energy storage provides power to the load during times when no power is extracted from the power transfer signal (e.g. due to the rectifiers not conducting) and the depletion rate indication may indicate how quickly the available/stored energy is depleted by the load (e.g. relative to the energy storage capacity). The energy storage may typically be a smoothing capacitor and the depletion rate indication may indicate the rate at which the stored energy as measured by the charge of the capacitor and/or the voltage of the capacitor is depleted/reduced when no power is extracted from the power transfer signal.

The power transmitter communicator 207 receives the depletion rate indication from the power receiver and adapts a parameter of the power transmitter operation depending on the depletion rate indication. Specifically, the power transmitter controller 205 may be arranged to control the driver 201 to generate the drive signal to be in a burst mode where the drive signal is switched on during some time intervals, referred to as power on time intervals, and switched off outside of these power on time intervals. The time between power on time intervals will also be referred to as power off time intervals. It will be appreciated that in some cases, other time intervals may also be employed.

The driver 201 is accordingly arranged to operate in a burst mode in which the drive signal switches between power off time intervals and power on time intervals. When in the power off time intervals, a (minimum/average/instantaneous/peak) power level of the drive signal does not exceed a fifth of a (maximum/peak/average) power level of the drive signal during power on time intervals. In many cases, the driver 201 is arranged to fully switch the drive signal off during the power off time intervals and to switch it on during the power on time intervals. For example, as illustrated in FIG. 7, power off time intervals may be introduced to the varying power transfer signal.

However, further, the power transmitter controller 205 is in the power transmitter of FIG. 2 arranged to control the driver 201 to adapt a timing of the power on time intervals in dependence on the depletion, rate indication. In particular, in many embodiments, the power transmitter controller 205 may be arranged to adapt the duration and/or the timing of the power on time intervals dependent on the depletion rate indication. For example, the power transmitter controller 205 may be arranged to increase the duration of the power on time intervals for the depletion rate indication being indicative of an increasing depletion rate. The power transmitter controller 205 may determine the duration of the power on time intervals as a monotonically increasing function of the depletion rate.

The power transmitter communicator 207 may thus effectively be arranged to switch off the power transfer signal during part of the power transfer and specifically this may specifically be done during times when the power receiver would not extract power from the power transfer signal due to e.g. the rectifiers not being on. This may substantially reduce the losses incurred by the power transfer. This may increase efficiency and/or reduce heat generation and thus facilitated thermal design of the power transmitter and the power receiver. The approach may reduce losses due to the power transfer signal inducing current on non-friendly metal parts and may reduce the thermal heating induced in such metal. Further, the power transmitter controller 205 may adapt the power on time intervals to reflect the specific power path of this specific power receiver by adapting the time on intervals (specifically the duration) to match the energy storage and power extraction of the specific power receiver.

In many embodiments, the power receiver may further be arranged to transmit a rectifier indication which indicates whether the power path of the power receiver includes a rectification function or not. In some embodiments, the rectifier indication may simply indicate whether the power path includes rectification or not. In other embodiments, the rectifier indication may provide a more detailed indication of the configuration of the rectification of the power path. For example, it may indicate whether the power path includes a halfwave or a full wave rectification. In other embodiments, the rectifier indication may provide information of whether the power path uses diodes or active rectifiers to perform rectification, whether the rectification includes a full bridge or single rectifier circuit, etc.

In some cases, the rectifier indication may be provided indirectly and together with the depletion rate indication. For example, a depletion rate indication may only be transmitted by power receivers that do include rectification and accordingly receiving a depletion rate indication from the power receiver will also be a rectifier indication indicating that indeed the power path of the power receiver includes rectification.

The power transmitter controller 205 is arranged to adapt a timing property for the power on time intervals (and thus the power off time intervals) in dependence on the rectifier indication. In many embodiments, the power transmitter controller 205 is arranged to select between a predetermined timing property that is independent of the depletion rate indication if the rectifier indication indicates that the power path does not include any rectification (e.g. the predetermined setting may be that the duration of the power on time intervals is maximized) and to switch to a timing property that does depend on the depletion rate indication if the rectifier indication indicates that the power path does include any rectification. In some embodiments, the power transmitter controller 205 may for example use a different relationship between the depletion rate indication and the timing property dependent on the configuration of the power path. For example, the power transmitter may store different functions for determining the timing property as a function of the depletion rate indication for different configurations. It may then retrieve the function for the configuration reported by the rectifier indication (such as e.g. whether half or full wave rectification is performed) and proceed to determine the timing property for the power on time intervals using the extracted function.

It will be appreciated that different data/information can be represented by the depletion rate indication in different embodiments.

In many embodiments, the energy storage depletion rate indication includes an indication of a value of smoothing capacitance of the power path of the power receiver. For example, in some embodiments, the depletion rate indication may directly indicate the capacitance of the smoothing capacitor, such as e.g. how large the smoothing capacitance is in µF or mF. The power transmitter controller 205 may then include a function which directly calculates for how much of the power cycle the rectifier will conduct (it is noted that due to the dynamics of the system, this can typically be determined directly based on the power cycle and thus based on the envelope of the power transfer signal/ drive signal without requiring consideration of the high frequency oscillations). This duration will typically depend on the power being extracted from the smoothing capacitor and thus by the load. In many cases, the power transmitter may have access to such information by other means. For example, the power transmitter may receive such information through other data being received from the power receiver or may e.g. determine the extracted power by measuring the average power being extracted from the power transfer signal/drive signal. Indeed, in some embodiments, the system may be set up to provide a predetermined level of power and the determination of the duration may be based on this predetermined level.

Once the power transmitter controller 205 has determined the proportion of the power cycle during which the rectifier of the power path will conduct, it may proceed to set the duration of the power on time intervals to be slightly larger than the determined duration. It may then proceed to generate the power on time intervals to have a corresponding duration.

Typically, the power on time intervals are positioned to be include the maximum of the power cycle. For example, the end time may be set to be shortly after a maximum of the envelope of the power cycle with the start time then being determined to provide the desired duration. This may ensure that the power transfer signal is on for the full duration during which the rectifier conducts but to be off for most of the time when the rectifiers do not conduct. However, in some embodiments, other timings may of course be used although typically the power on time intervals will include the time of the maximum envelope/amplitude in order to provide improved power transfer.

In some embodiments, the depletion rate indication may be arranged to include an indication of a time constant of a load resistance and a smoothing capacitor of the power path of the power receiver. The load resistance may specifically include the resistance of the load 505 which is powered by the power transfer. The depletion rate indication may for example directly provide an RC time constant where R represents the resistive power/load of the power transfer signal and C indicates the combined smoothing capacitance of the power path.

Such a time constant may thus directly indicate the discharge rate of the smoothing capacitor and can be used to determine when the next power cycle will reach an amplitude level that exceeds the discharged voltage over the smoothing capacitor, and thus when the rectifier will be able to switch on again.

In some embodiments, the time at which the envelope exceeds the discharged voltage of the smoothing capacitor may be determined and the start time of the power on time intervals may be determined to correspond to this time (either directly or often with a small offset resulting in the power transfer signal being switched off slightly before). For example, in many embodiments, the start time may be determined to be within an interval that does not differ from this time by more than say 5% or 10% of a power cycle duration. In many embodiments, the start time may be determined to occur at or before the time at which the rectifier would potentially switch on.

In many embodiments, the end of the power on time intervals may be determined to correspond to a time of the maximum envelope. For example, in many embodiments, the start time may be determined to be within an interval that does not differ from this (maximum envelope) time by more than say 5% or 10% of a power cycle duration. In many embodiments, the end time may be determined to occur at or after the time of the maximum envelope/amplitude.

Such approaches may allow the power transfer signal to be generated for the full duration of the rectifier potentially being on, and thus power transfer occurring, while at the same time allowing it to be switched off for the majority of time when the rectifier does not conduct and no power transfer occurs. Thus, losses may be substantially reduced without impacting the power transfer.

In some embodiments, the depletion rate indication includes an indication of a charge of a smoothing capacitor of the power path of the power receiver. In some embodiments, this may be accompanied by an indication of the power and resistance of the load. Specifically, in some embodiments, the depletion rate indication may provide an indication of the charge Q of the capacitor.

For example, the power receiver has a rectifier with a smoothing capacitor and load which have a time constant (RC-time) of 100ms, it is known that the capacitor is empty after a few RC times. When the RC-time is transferred before power transfer, the power transmitter knows how fast the load charges/discharges. So, the power transmitter can predict the moment the rectifier would start conducting during normal operation. It can keep the inverter off when the rectifier of the power receiver is not conducting. It can be predicted how fast the output voltage will drop, and when the resonant voltage would cross that value, since the signal shape follows the mains envelope. With a RC-time of 100ms the discharge rate is so low, that only power is transmitter during the peak. The output voltage barely changes after a single period, so the inverter only has to be on during the peak.

Thus, specifically, in some embodiments, a charge Q of the capacitor e.g. at the end of a power cycle can be communicated and used by the power transmitter to calculate e.g. the time constant of the discharge of the capacity and thus the depletion/discharge rate.

As previously described, the power transmitter controller 205 may in many embodiments be arranged to adapt the duration of the power on time intervals and the power off time intervals in dependence on the depletion rate indication. This may be done directly or may e.g. be implicit by determining a start time and an end time of the power on time intervals. The power transmitter controller 205 may typically increase the duration of the power on time intervals for the depletion rate indication being indicative of an increasing depletion rate. For example, for a smaller smoothing capacitor, the discharge rate will be faster and therefore the proportion of the time in which the rectifier potentially conducts and power is extracted will increase. Accordingly, the duration of the power on time intervals is increased in comparison to a larger smoothing capacitor which may have a much lower voltage drop resulting in the time interval in which the rectifier potentially conducts and power is extracted will be substantially smaller.

In the approach, the power transfer operation may accordingly in many scenarios be improved by the power receiver transmitting an indication of whether its power path includes a rectifier or not as well as an indication of the depletion/discharge rate of any energy storage that is included in the power path and the power transmitter may adapt its operation in dependence on the properties of the power path.

Typically the depletion rate indication and rectifier indication are transmitted prior to the initialization of the power transfer phase. In many embodiments, it may be transmitted during a pre-power transfer initialization/configuration/negotiation phase. The power transmitter may accordingly initiate and setup the power transfer to match the conditions and properties of the power path.

In the following the approach and principles may be illustrated by a specific non-limiting example.

In the example, before transferring power, the power receiver sends information about its power path and load configuration. If the power receiver includes a rectifier, its RC-time, or a Q value (charge of capacitor) may be transmitted to the power transmitter. With this information, the transmitter can adapt its control scheme to only turn the driver output/inverter on when power is actually transferred and extracted from the power transfer signal.

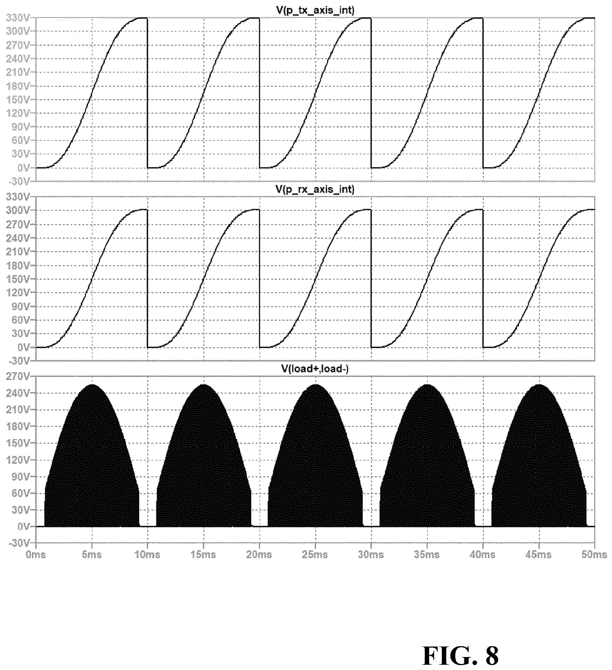

This will in particular allow improved performance for low power control with burst mode power transfer having both power on time intervals and power off time intervals. For a linear load without a rectifier, power may be provided during the whole power cycle period. However, for a non-linear load with rectifier and a sufficiently large buffer capacitor being present, power may be provided during a short time interval of each power cycle period. FIGs. 8-10 illustrate signals for different scenarios for different power. In the figures, the bottom chart illustrates the load voltage, the middle chart illustrates the accumulated power that is provided to the load during a power cycle. The middle chart specifically shows the integration of the power provided to the load during a single power cycle. The top chart shows the accumulated power provided to the power transfer signal from the driver during a power cycle. In the specific example, this power is the same as the accumulated power that is extracted from the power transfer signal by the power receiver during a power transfer cycle. The chart thus shows the power of the power transfer signal integrated during a power cycle.

In the example of FIG. 8, the power path does not include any smoothing capacitor (or equivalently this has a value of 0F). The voltage provided to the load follows the power transfer signal directly and the high frequency (of the inverter switching) is also present at the load. The envelope of the load voltage follows the power cycle (and typically follows a sinewave shape). Accordingly, the power extracted by the load during a power cycle (i.e. the energy provided during a power cycle) initially increases slowly and then faster and faster as the amplitude over the load increases. Following the time of maximum envelope, the rate of the increase of energy extracted in the given power cycle reduces. In the example where there is no energy storage/smoothing, power is extracted from the power transfer signal during the entire power cycle and the power extracted from the power transfer signal directly matches that provided to the load, reduced by the losses.

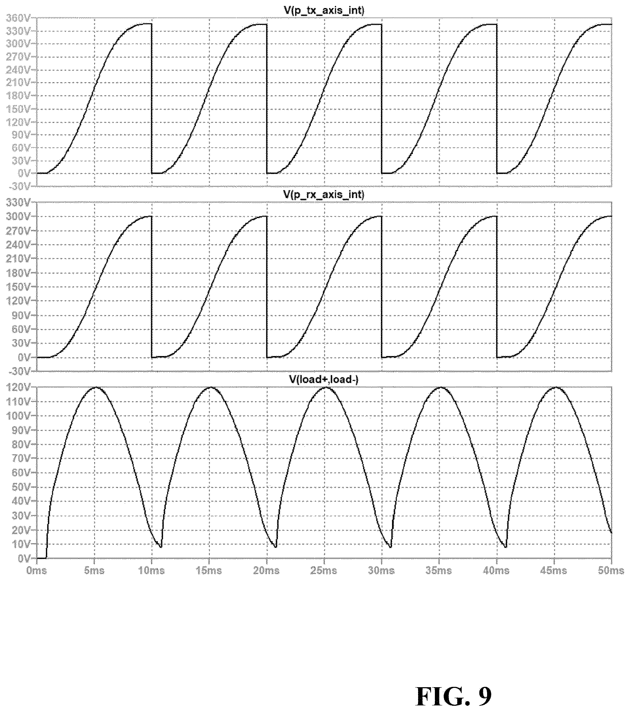

In the example of FIG. 9, the power path includes a capacitor and specifically the smoothing capacitor and load has a time constant of RC=1ms. In the example, the load is provided with a relatively slowly varying DC voltage, i.e. the high switching frequency is removed by the smoothing capacitor. However, the DC voltage variations are very large and the voltage over the load varies substantially during a power cycle. Indeed, the voltage is relatively similar to a rectified sine wave. Accordingly the integrated power provided to the load in the power cycle resembles the example of FIG. 8 but in particular the energy provided to the load is not zero at the start or end of each power cycle as the power is provided from the smoothing capacitor at these times (the voltage over the capacitor, and thus over the load, does not fully return to zero). However, no power is extracted from the power transfer signal when the envelope is so low that the rectifiers do not conduct (i.e. during the start and end of a power cycle). Accordingly, the accumulated power extracted from the power transfer signal is constant for time periods at the start and end of each power cycle, and thus the gradient of the signal of the top chart of FIG. 9 is zero for a short time interval at the start and end of each power cycle. Accordingly, the power transmitter controller 205 may set the power off time intervals for the drive signal to correspond to these time intervals.

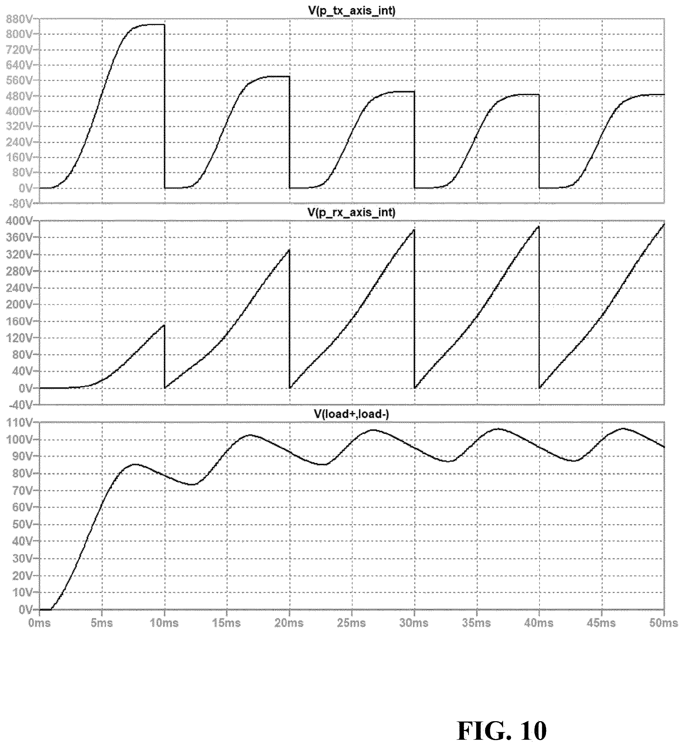

In the example of FIG. 10, the power path includes a much larger capacitor and specifically the smoothing capacitor and load has a time constant of RC=24ms. In the example, the load is still provided with a varying DC voltage, i.e. the high switching frequency is removed by the smoothing capacitor. However, the DC voltage variations are substantially smaller than for the smaller smoothing capacitor of FIG. 9. Accordingly, the power provided to the load during a power cycle is substantially more constant and indeed the integration of this power exhibits an almost linear increase. However, as a result, the proportion of the power cycle during which the rectifiers conduct is substantially reduced. Accordingly, the gradient of the accumulated power that is extracted from the power transfer signal is substantially zero for relatively large time intervals at the beginning and end of each power cycle. Accordingly, the power transmitter controller 205 may set the power off time intervals for the drive signal to correspond to these substantially larger time intervals.

In some embodiments, the power transmitter controller 205 may be arranged to modify the relationship between the energy storage depletion rate indication and the timing property in dependency on a duration of the power transfer. Specifically, a different relationship may be used initially to start up the power transfer phase after which the system may switch to normal operation. Such an approach may allow improved power transfer initialization as it may reflect that conditions are different during the start up phase than during steady state operation.

In particular, during the start of the power transfer operation, the energy storage/smoothing capacitor is typically uncharged. As a result, the power being extracted from the power transfer signal may be larger during initial power cycles than during steady state operation in order to charge up the capacitor. Further, as the voltage may be lower until the capacitor is charged, the power can be extracted from the power transfer signal during a larger proportion of the duty cycle (as the envelope voltage exceeds the capacitor voltage for a larger proportion of the duty cycle). Such effects can in particular be seen for the initial power cycles of FIG. 10.

Accordingly, in many embodiments the power transmitter controller 205 may be arranged to set a duration of the power on duration time intervals to be higher during an initial time interval of a power transfer than during a later time interval for a same value of the depletion rate indication. Indeed, in some cases, the duration of the power on time intervals may in some cases set to the full duration of the power cycle for a number (e.g. a predetermined number) of power cycles following the start of a power transfer after which it may revert to normal operation where the duration of the power on time intervals are reduced depending on the depletion rate indication.

In some embodiments, the power transmitter controller 205 may be arranged to adapt or modify another property of the operation than the timing of the power on/off time intervals. Specifically, the power transmitter controller 205 may be arranged to adapt a property of a power control loop in dependence on the energy storage depletion rate indication. In particular, the power transmitter controller 205 may be arranged to adapt a time constant for the power control loop dependent on the depletion rate indication.

For example, the power request of the receiver is typically aimed at the average power that it wants to receive. The smoothing capacitor needs to be charged with a certain amount of energy. The power transmitter can add a certain amount of power for a certain period of time to speed up or correct for the charging of the capacitor. For example, if the power receiver requests 10W and the energy needed to charge the smoothing capacitor is 10mJ, the power transmitter can deliver that extra energy by controlling the first period to a higher power than 10W. 11W (1W for 10ms is 10mJ).

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an inductive power transfer signal, the power transmitter (101) comprising:
a power transfer coil (103) arranged to generate the power transfer signal;
a driver (201) arranged to generate a drive signal for the power transfer coil (103) to generate the power transfer signal, the driver (201) being arranged to generate the drive signal to switch between power off time intervals and power on time intervals, a level of the drive signal during power off time intervals not exceeding a fifth of a level of the drive signal during power on time intervals;
a communication unit (207) arranged to communicate with the power receiver (105), the communication unit (207) being arranged to receive an energy storage depletion rate indication, the energy storage depletion rate indication being indicative of a rate of depletion of an energy storage of a power path of the power receiver; and
a controller (205) arranged to adapt a timing property of at least one of the power on duration time intervals and the power off time intervals in dependence on the energy storage depletion rate indication.

2. The power transmitter of claim 1 wherein the energy storage depletion rate indication includes an indication of a value of smoothing capacitance of the power path of the power receiver.

3. The power transmitter of claim 1 or 2 wherein the energy storage depletion rate indication includes an indication of a level of power being provided to a load of the power path.

4. The power transmitter of any previous claim wherein the energy storage depletion rate indication includes an indication of a time constant of a load resistance and a smoothing capacitor of the power path of the power receiver.

5. The power transmitter of any previous claim wherein the energy storage depletion rate indication includes an indication of a charge of a smoothing capacitor of the power path of the power receiver.

6. The power transmitter of any previous claim wherein the timing property is a duration of at least one of the power off duration time intervals and the power on time intervals.

7. The power transmitter of any previous claim wherein the controller (205) is arranged to increase a duration of the power on duration time intervals for the energy storage depletion rate indication being indicative of an increasing depletion rate.

8. The power transmitter of any previous claim wherein the controller (205) is arranged to modify a relationship between the energy storage depletion rate indication and the timing property in dependence on a duration of the power transfer.

9. The power transmitter of any previous claim wherein the controller (205) is arranged to set a duration of the power duration time intervals to be higher during an initial time interval of a power transfer than during a later time interval for a same value of the energy storage depletion rate indication.

10. The power transmitter of any previous claim wherein the driver (201) is arranged to generate the drive signal to have a varying envelope and the controller (205) is arranged to locate the power on time intervals to include a maximum of the envelope.

11. The power transmitter of any previous claim wherein the controller (205) is arranged to adapt a property of a power control loop in dependence on the energy storage depletion rate indication.

12. The power transmitter of claim 11 wherein the property of the power control loop is a time constant.

13. The power transmitter of any previous claim wherein the communication unit (207) is arranged to receive a rectification indication being indicative of whether the power path of the power receiver includes a rectifier function.

14. A power receiver (105) for wirelessly receiving power from a power transmitter (101) via an inductive power transfer signal, the power receiver (105) comprising:
an input circuit (107, 503) comprising a receiver coil (107) arranged to extract power from the power transfer signal;
a power path (503) coupling the input circuit (107, 503) to a load (505) to provide power extracted from the power transfer signal to the load (505), the power path (503) including an energy storage;
a communicator (511) arranged to communicate data with the power transmitter (101), the communicator (511) being arranged to transmit an energy storage depletion rate indication being indicative of a rate of depletion of an energy storage of the power path of the power receiver.

15. A method of operation for a power transmitter (101) wirelessly providing power to a power receiver (105) via an inductive power transfer signal, the method comprising:
a power transfer coil (103) generating the power transfer signal;
a driver (201) generating a drive signal for the power transfer coil (103), the driver (201) generating the drive signal to switch between power off time intervals and power on time intervals, a level of the drive signal during power off time intervals not exceeding a fifth of a level of the drive signal during power on time intervals;
communicating with the power receiver (105) including receiving an energy storage depletion rate indication from the power receiver, the energy storage depletion rate indication being indicative of a rate of depletion of an energy storage of a power path of the power receiver; and
adapting a timing property of at least one of the power on duration time intervals and the power off time intervals in dependence on the energy storage depletion rate indication.
